# EUROPEAN PATENT SPECIFICATION

(11) **EP 1 353 957 B1**
(45) Date of publication and mention of the grant of the patent: **25.03.2009**
(21) Application number: 01902105.4
(22) Date of filing: 16.01.2001
(51) Int. Cl.: C08B 1/00, C13K 1/02, C08B 15/02

(54) **DISRUPTION OF PLANT MATERIAL TO READILY HYDROLYZABLE CELLULOSIC PARTICLES**
AUFSCHLUSS VON PFLANZENMATERIAL ZU LEICHT HYDROLYSIERBAREN ZELLULOSETEILCHEN
DISLOCATION DE MATIERE VEGETALE EN PARTICULES CELLULOSIQUES FACILEMENT HYDROLYSABLES

(43) Date of publication of application: 22.10.2003
(73) Proprietor: Biomass Conversions, L.L.C., Los Angeles, CA 90017 (US)
(72) Inventor: HATA, Seiji, Tokyo 113-0033 (JP)
(74) Representative: Fiener, Josef
(86) International application number: PCT/US2001/001615
(87) International publication number: WO 2002/057317

(56) References cited:
- EP-A- 0 018 348
- DE-A- 2 552 449
- US-A- 4 124 440
- US-A- 4 992 105
- PATENT ABSTRACTS OF JAPAN vol. 1999, no. 02, 26 February 1999 (1999-02-26) & JP 10 295390 A (TSURUNAGA TAKEHISA;HATA SEIJI), 10 November 1998 (1998-11-10)
- PATENT ABSTRACTS OF JAPAN vol. 1998, no. 08, 30 June 1998 (1998-06-30) & JP 10 066594 A (BIO STAR:KK), 10 March 1998 (1998-03-10)

## Description

### BACKGROUND OF THE INVENTION

### 1. Field of the Invention

The present application concerns biomass and more specifically methods to reduce cellulosic fibers to a readily hydrolyzable state.

### 2. Description of Related Art

Our world is powered by energy from the nearest star, the Sun. With the exception of energy derived from the fission of atomic nuclei virtually all other energy sources used by humans are ultimately of solar origin. Energy derived from flowing water is actually solar energy stored when the water was evaporated from the ocean or other body of water. Wind energy is a product of solar heating of the atmosphere. Fossil fuels are merely solar energy captured in chemical form by the photosynthesis of long dead plants. Biomass fuels (*e.g.*, wood) represent the photosynthetic products of contemporary plants.

Thus, the vast majority of energy expended by living creatures comes from solar energy captured chemically by photosynthesis. In fact, photosynthetic plants are so efficient at using solar energy to "fix" atmospheric carbon dioxide into carbohydrates that plants typically construct their skeletons (cell walls) from these carbohydrates. This brings up one of the paradoxes of photosynthetic plants. A portion of the photosynthate is available in the plant as sugars and starches-carbohydrates that are readily metabolized by the plant cells as well as by animals that consume the plants as a food source. However, a larger proportion of the photosynthate is used to synthesize cellulose (a β 1-4 linked glucose polymer), a structural material that is not readily metabolized by either plants or animals. Cellulosic biomass is only slowly broken down and metabolized by specialized bacteria and fungi. Thus, the tremendous mass of cellulosic carbohydrates in plants is generally not available for animal metabolism even though it is essentially just sugar.

Cellulosic biomass represents a problem in mankind's seemingly unending quest for food and for fuel. Many agricultural practices produce large amounts of cellulosic biomass (*e.g.*, wheat or rice straw, com stalks, cobs, chaff and similar "wastes"). Although this material is largely carbohydrate, it cannot be used as food. Although it is readily burned, it cannot readily be used as fuel because modem internal combustion engines and turbines are not adapted to use such material. True, biomass can be burned in a furnace to produce heat which can power a boiler or other heat engine, but this generally results in air pollution and is not overly efficient. As a result biomass is often treated as neither a food nor fuel but simply as a waste product that requires more or less expensive disposal.

To be sure there is limited conversion of cellulose into fuel gases such as methane through anaerobic microbial digestion. However, such digesters are relatively complex and have not been widely adopted. It is also potentially possible to use enzymes such as cellulase to convert the cellulose into simple sugars. These sugars can then be isolated or fermented into ethanol which is an excellent fuel for existing internal combustion engines and turbines. Unfortunately, enzymes work only slowly on intact cellulosic materials. It is also potentially possible to used chemical means (extreme acidic or alkaline conditions) directly to hydrolyze cellulose into simple sugars. Although such hydrolysis is a thermodynamically favored reaction, the mechanical structure of intact cellulose greatly limits the efficiency of such hydrolysis.

Plant cells are generally surrounded by complex carbohydrate cell walls. The cell wall is composed, to a large extent, of a β-1,4 liked glucose polymer-cellulose. The cellulose molecules of the cell wall are generally arranged in linearly coherent paracrystalline (crystal-like) structures sometimes known as microfibrils. The paracrystalline regions of cellulose are linked together by other carbohydrate polymers, and possibly by some proteins. The precise structure and linkage of these "hemicellulosic" materials is currently unknown and is the object of much scientific study. Generally these non-cellulosic carbohydrates are structurally more flexible than paracrystalline cellulose and can offer an easier "attack point" for breaking down the cell walls. The cellulosic and non-cellulosic materials are arranged in larger structures generally known as fibrils. Usually hydroxyphenylpropane polymers known as "lignin" are also included. Lignin adds additional strength and resistance to microbial attack. The fibrils are often arranged in a helical or some other pattern and in layers to create the actual cell wall. The cell walls of adjacent cells are "cemented" to each other by a special pectic carbohydrate matrix (the middle lamella) so that a coherent multicellular structure is created.

The precise composition of wood or other biomass varies depending on the source. Wood, which consists largely of water conducting cells and structural fiber cells, is relatively high in lignin (20-35%). Herbaceous plant materials are usually somewhat lower in lignin (10-20%) with bagasse (sugar cane cell walls) having about 21% lignin. Gymnosperm wood averages around 50% cellulose and 35% lignin by dry weight. The remaining material is largely "hemicellulosic" carbohydrates. Table 1 shows the cellulose and lignin compositions of some common plant materials.

**Table 1**

| **Plant Material** | **Percent Cellulose** | **Percent Lignin** |
|---|---|---|
| Cotton Fiber | 95-99 | <1 |
| Ramie | 80-90 | ∼5 |
| Bamboo | 40-50 | ∼20 |
| Wood | 40-50 | 20-35 |
| pine | | 34 |
| maple | | 22.9 |
| birch | | 21.6 |
| oak | | 20 |

In the paracrystalline arrays neighboring cellulose polymer chains are essentially parallel and held in an almost crystalline structure by hydrogen bonds. This structure is largely responsible for the tremendous tensile strength of wood products. This structure resists the penetration of water and enzymes and greatly slows the operation of cellulose digesting enzymes. The enzymes are unable to directly attack the vulnerable glycosidic linkages. Instead, they are forced to "chew away" at the surface cellulose chains and can only slowly penetrate the paracrystalline arrays.

Therefore, a great need remains for a process to efficiently convert cellulosic biomass into food or fuel. It is well known that a way to increase the rate of many physical or chemical processes is to increase the surface area of the material subjected to the process. Everyone knows that a hard candy dissolves much more rapidly in one's mouth if one chews it into tiny bits. Not everyone realizes that this occurs because the chewing process greatly increases the candy's surface area that is then subjected to dissolution by water. Similarly, it is known that reducing cellulosic biomass to small pieces will accelerate its chemical dissolution. For example, in producing paper pulpwood is reduced to wood chips prior to "cooking" in a chemical mixture to ensure digestion to pulp. Wood reduced to saw dust or wood "flour" is more readily attacked by cellulose digesting enzymes than is large pieces of wood. However, even the finest available wood "flour" is relatively resistant to enzymatic digestion. This is probably because mechanical processes that reduce the wood to "flour" have little or no effect on the paracrystalline regions. Therefore, most of the cellulose remains inaccessible even though the material has been mechanically processed as much as possible.

### SUMMARY OF THE INVENTION

The present invention is a process for disrupting cellulosic biomass into a readily hydrolyzable cellulose powder. Essentially, the process consists of gradually hydrating the paracrystalline cellulose while applying mechanical forces to strip away cellulose polymer chains as soon as the hydration negates the hydrogen bonds between adjacent polymer chains. A preferred way of attaining disruption is to rapidly agitate particles of cellulosic biomass in a container to form a gaseous suspension of the particles. The temperature of the suspended particles is raised and water is gradually introduced as a fine spray or as vapor. The cellulosic particles become increasingly hydrated without the obvious presence of liquid water. The particles can be periodically dehydrated by increasing the rate of mixing and at the same time ceasing the addition of water while venting water vapor to the atmosphere. The ultimate product is an extremely fine cellulosic podwer that is exceptionally susceptible to either chemical hydrolysis or enzymatic digestion to yield simple sugars.

### BRIEF DESCRIPTION OF THE FIGURES

FIG. 1 shows a diagrammatic representation of a complete system to take cellulosic material and produce the disrupted material of the present invention.
FIG. 2 shows a cut away view of a beater used to process cellulosic material into a form suitable for use in the present invention.
FIG. 3 shows a cross-section of the beater of FIG. 2 along the plane defined by the arrows 3 in FIG. 2.
FIG. 4 is a top view of the beater of FIG. 2 to show the shaft supporting the pulverizing weights.
FIG. 5 shows a partially exploded view of the disrupter of the present invention combined with a fractionater designed to purify the disrupted cellulosic material.
FIG. 6 shows a sectional view of the disrupter of FIG. 5 along the plane defined by the arrows 6.
FIG. 7 shows a sectional view of the disrupter of FIG. 5 along the plane defined by the arrows 7 to reveal a top view of the disrupter paddles.

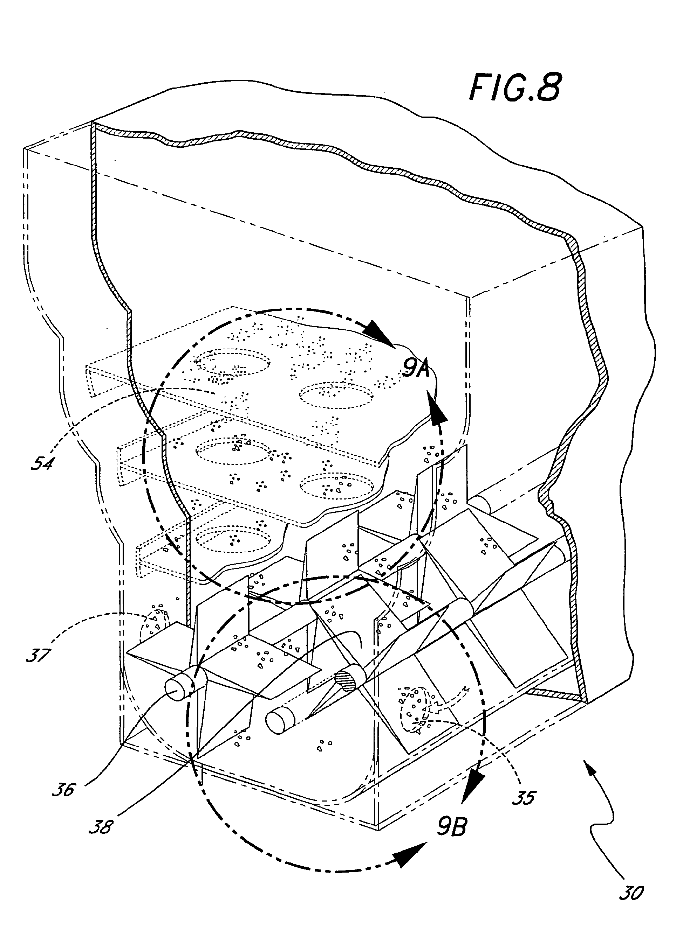

FIG. 8 shows a partially exploded view of the disrupter of FIG. 5
FIG.. 9A and FIG. 9B show magnified details of the regions marked 9A and 9B in FIG. 8
FIG. 10 shows a scanning electron micrograph of the disrupted material at a magnification of 2,000X.
Fig. 11 shows a scanning electron micrograph of partially disrupted cellulosic material that has formed "micro-balls" due to excessive addition of water at a magnification of 600X.
FIG. 12 is a graph contrasting the enzymatic digestion of fully disrupted cellulosic material with partially digested cellulosic material.

### DETAILED DESCRIPTION OF THE PREFERRED EMBODIMENT

The following description is provided to enable any person skilled in the art to make and use the invention and sets forth the best modes contemplated by the inventor of carrying out his invention. Various modifications, however, will remain readily apparent to those skilled in the art, since the general principles of the present invention have been defined herein specifically to provide an essentially mechanical process to predigest biomass to make it extremely susceptible to enzymatic and other hydrolysis.

The present inventor has unexpectedly found mechanical methods of reducing biomass to small particles that readily undergo enzymatic or other hydrolysis. As alluded to above it is helpful to consider the various levels of organizational structure of biomass cellulosic material. The individual plant cells are enveloped by a cellulosic wall, and adjacent cell walls are cemented together to create a macroscopic structure such as wood. Generally if the macroscopic structure is mechanically attacked as with a saw or a pounding force as in a ball mill, the individual cells become separated along the junctures between the cell walls. In some cases, the individual cell walls will become broken or torn, but the substructure of the wall is largely unaffected.

If the plant materials are subjected to chemical digestion as in paper making, the individual cells become separated (maceration), and some wall components, *e.g.*, lignin, are altered or extracted. Generally the carbohydrates of the wall are not altered until sufficient acid or base are applied to extract the "hemicellulosic" component. The cellulose itself remains resistant to all but the most strenuous chemical attack.

Therefore, the layered and intertwined arrangement of cellulose within the cell wall is little altered by mechanical disruption and resists many chemical attacks. Mechanical forces simply are inadequate to disrupt a significant proportion of the hydrogen bonds that give paracrystalline cellulose its unusual properties. It is not that a single hydrogen "bond" is particularly strong. It is, in fact, quite weak. However, the parallel polymer chains that make up cellulose are aligned so that an extremely large number of hydrogen "bonds" cooperate so that a significant force is required to effect disruption.

While it is quite difficult to simultaneously disrupt the large number of hydrogen bonds that exist in a paracrystalline array of cellulose, the present inventor has discovered novel methods of gradually breaking these bonds. The processes of the present invention produces particles of cellulosic material wherein many if not all of the paracrystalline hydrogen bonds have been disrupted. This produces a particulate cellulosic material that can be readily hydrolyzed to glucose either enzymatically or chemically (*e.g.*, by acid or base hydrolysis). The experimental results presented below clearly demonstrate the steps needed to carry out the present invention. The inventor believes it is possible to infer the underlying mechanism of the process from the presented data. However, the claimed invention is the process. The explanation of the physical and chemical events underlying the invention is only a reasonable hypothesis based on the experimental results. This hypothesis is always subject to change and revision.

It is believed that the present invention "mechanically" reduces cellulosic plant cell walls into readily hydrolyzable particles through a combination of applied force and solvation. Cellulosic polymers are highly hydrophilic although not water-soluble. These materials readily take up and bind large quantities of water although under normal circumstances mere addition of water is incapable of disrupting the hydrogen bonds in paracrystalline regions of cellulose. Nevertheless, if water molecules were actually able to become intercalated between adjacent cellulose chains, the hydrogen bonds between adjacent cellulose chains would be replaced by hydrogen bonds between cellulose chains and water molecules. This would completely disrupt the paracrystalline properties of the cellulose.

A mechanical pounding or beating process can be combined with proper hydrating or solvating conditions so that the paracrystalline areas of cellulose are disrupted. It is generally agreed that mechanical forces of pounding or beating result in very little or no covalent bond breakage. This is because mechanical forces can not generally supply sufficient energy to a minute point to break a covalent bond. In the case of organic polymers such as cellulose mechanical forces pull adjacent polymer chains apart without actually breaking the chains. Because the paracrystalline arrays are regions of mechanical resistance, one might expect an efficient pounding process to reduce the cell walls to minute particles wherein each particle represents a paracrystalline array. In fact, normal mechanical processing only reduces the cell walls to fibers representing a large number of linked paracrystalline arrays.

However, when mechanical disruption is combined with the proper amount of hydration or solvation it is possible to reduce the cell walls to minute particles wherein the paracrystalline arrays are actually disrupted. Such disruption cannot occur if an excess of water is merely added to the processing. If a large amount of water is added, as in paper pulp processing, the hydrated cellulosic material merely "sloshes" about and remains as fragments consisting of portions of one cell or even several adjacent cells. That is, the excess water serves a lubricating function and prevents the mechanical forces from being effectively applied to the cellulosic material. If the cellulosic material is relatively dry, mechanical processing can reduce the cellulosic material to fragments representing fractions of a cell wall.

Here it is advantageous to partially hydrate the material to soften it before mechanical processing begins. However, if the material is kept sufficiently dry to avoid the lubricating effects of liquid water, the paracrystalline arrays are left intact. In addition, it is possible to mechanically process "dry" cellulosic material as far as possible whereupon additional water is added in an attempt to solvate the paracrystalline arrays. Unfortunately, addition of liquid water to the mechanically agitated cell wall fragments causes the fragments to stick together and form macroscopic "balls" (*e.g.*, one to several millimeters in diameter). Such structures effectively prevent the further mechanical reduction of the cellulosic material because most of the cellulose is bound up within a "ball" and the mechanical shear forces merely cause slippage (*e.g.*, rolling) between the "balls" or fragment and reform the balls.

What is required is a process that effectively transmits mechanical shear forces to the individual paracrystalline arrays while the surface of the array is being hydrated sufficiently to weaken the hydrogen bonds but insufficiently to result either in "ball" formation or in water lubrication which would prevent transmission of mechanical forces. Under these conditions the paracrystalline array is gradually stripped apart rather like peeling away layers of an onion. While it is believed that effective mechanical forces for the present process can be generated by a variety of ball mills and other grinding or crushing devices, good results can be achieved by a rotating paddle mill which is called a "disrupter" herein.

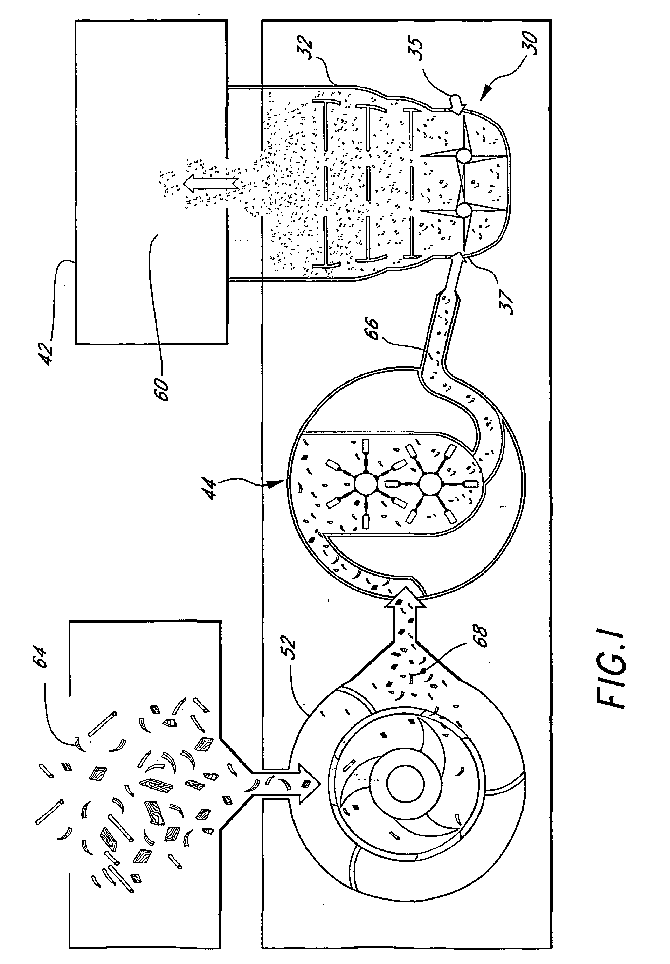

Although any reasonably small cellulosic fragments can be processed by the disrupter, the present inventor has found that the process is greatly accelerated by preprocessing the cellulosic material so that the disrupter operates only on very minute cellulosic particles. FIG. 1 is a diagram of the three mechanical devices that are used in the present invention. The real key to the invention is the disrupter **30** although the other devices used to preprocess the cellulosic material significantly accelerate the work of the disrupter **30.** In FIG. 1 the various devices are shown as being linked for efficient processing. However, in actual practice the various devices can be separate and the cellulosic material carried from one unit to the next. The first device is a planer **52.** This unit uses a rotating blade to shave pieces of cellulosic material **64** into thin shavings **68.** This device operates to shave the pieces of wood or other plant material into shavings that are only a fraction of a millimeter thick. The illustrated device operates exactly like a planer used by carpenters to shave pieces of wood for construction purposes. The planer **52** is very important for processing "hard" plant materials such as wood. Some softer plant materials may be adequately processed without use of the planer **53.**

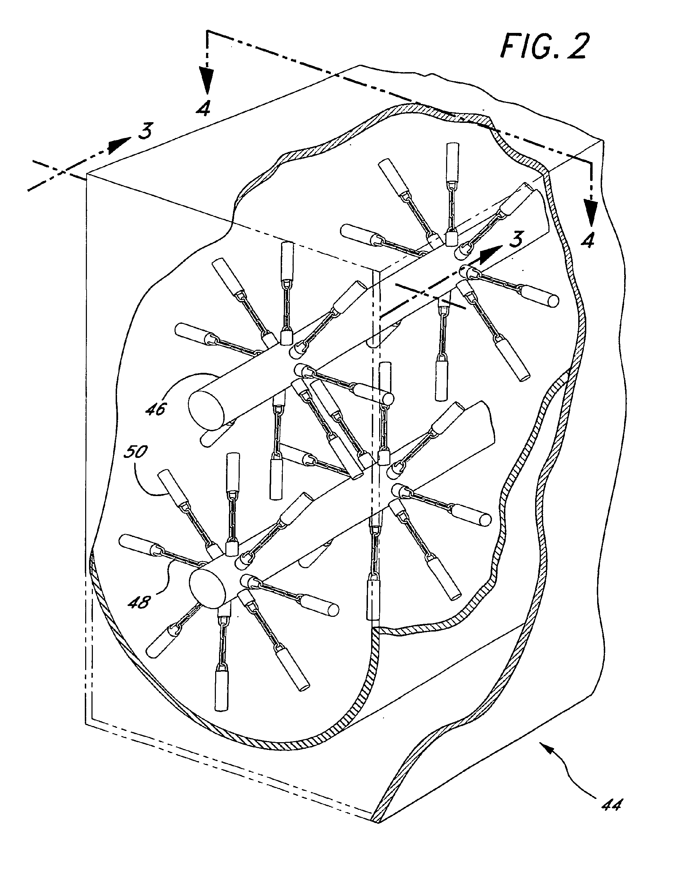

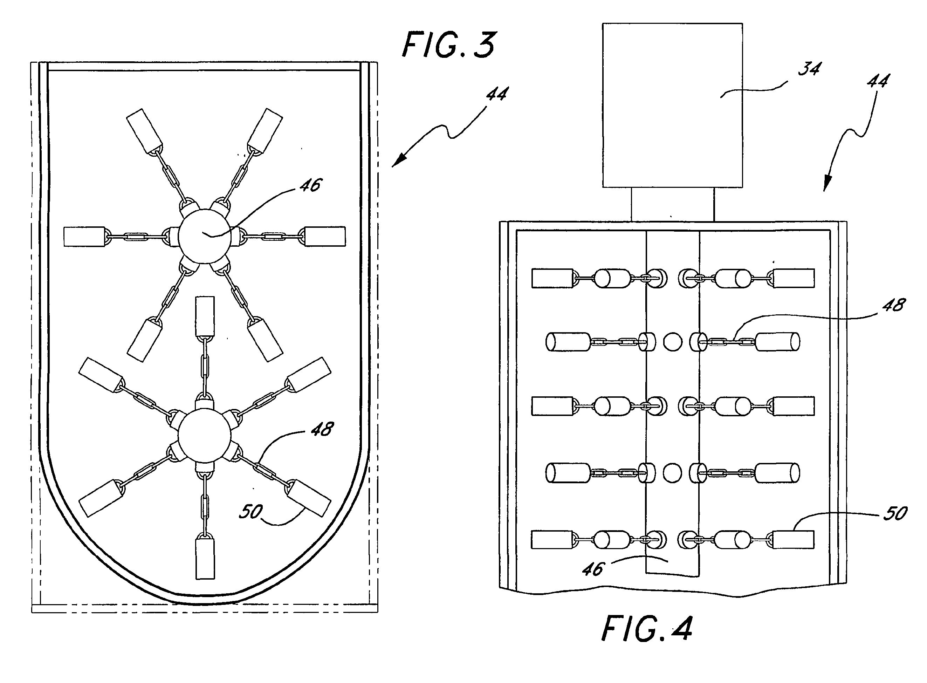

The thin cellulose shavings are then processed by a beater **44.** The task of the beater is to reduce the shavings **68** into tiny fragments **66** that have dimensions similar to saw dust. In fact, when saw dust is available, it can be used directly and the planer **52** and beater **44** can be omitted. FIGs. 2-4 illustrate the beater **44** in more detail. In the beater **44** a shaft **46** is rotated by a motor **34** at several hundred RPM. In the embodiment shown in FIG 4 there are two shafts **46.** Each shaft supports a plurality of weights **50** attached by chain links **48.** The weights **50** are borne in a number of whorls (two whorls shown), and the whorls of adjacent shafts **46** are spaced apart along the shaft length so that the weights **50** of one shaft **46** do not strike the weights **50** of the adjacent shaft **46.** Instead, the weights **50** and chains **48** strike and suspend the shavings **68** ultimately reducing them to cellulosic dust **66.** This process is relatively rapid and the dwell time for shavings to be reduced to dust is on the order of hours or less. The water content of the plant material is important in the preprocessing and in the actual disruption. Excessively moist materials are often best dried before the treated by the beater **44.** Water is then added back in the last step as explained below.

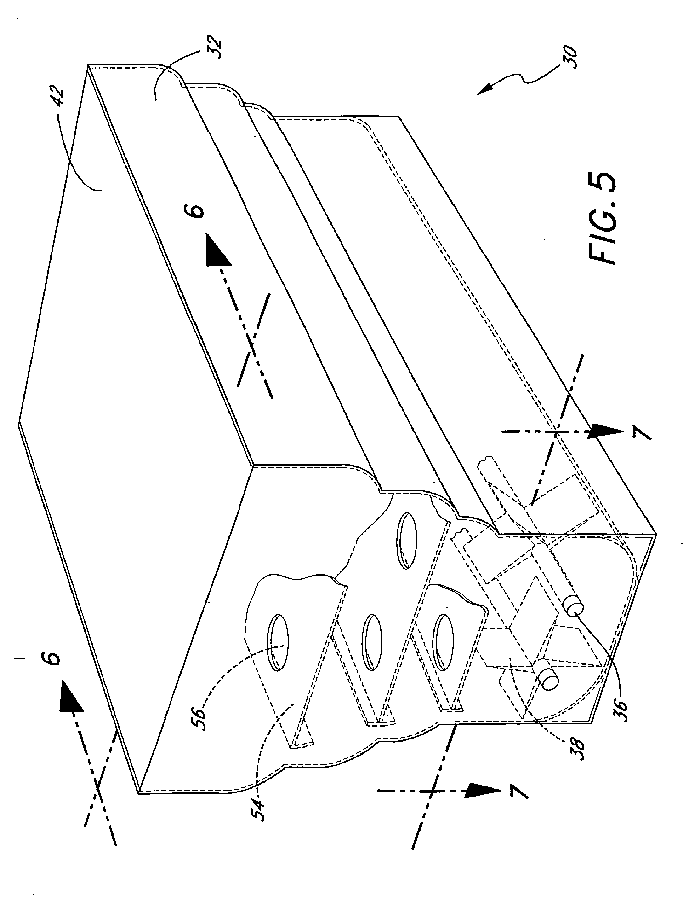

After the dust **66** is formed, it is fully disrupted in the disrupter **30** which is a preferred device for carrying out the inventive process. In FIG. 1 the dust **66** is shown entering the disrupter through a port **37** in a sidewall of a hopper **32.** As will be explained below, the disrupter **30** illustrated here has optional parts **54** (FIG. 5). However, it is perfectly acceptable to simply load the dust into the top of the hopper **32** in an embodiment devoid of the optional parts. FIG. 5 which shows an external perspective view of the device **30** illustrating the hopper **32** and a lid **42** closing the same.

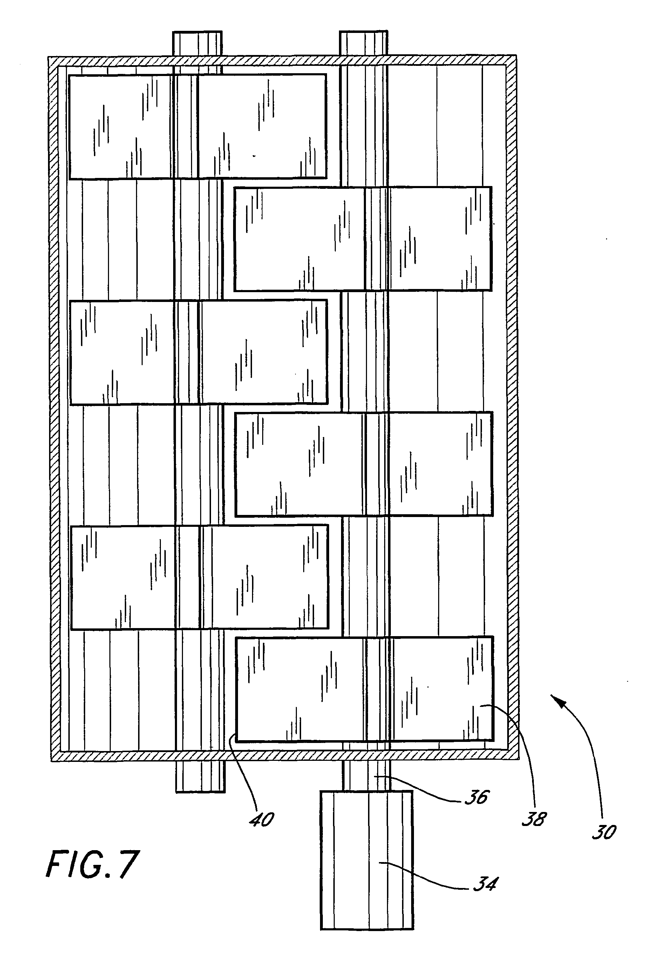

In the device **30** of FIG. 5 a plurality of counter rotating shafts **36** (here two) bear rigid paddles **38** that are spaced apart so that they come into relatively close contact (about 1 cm clearance) during rotation. FIG. 7 provides a longi-section of the device parallel to the shafts **36** supporting the paddles **38.** The shafts **36** are horizontally oriented and are disposed near the bottom of the hopper-like container **32.** The shafts **36** are counter-rotated by motors **34** (only one shown). Cellulosic dust in the hopper **32** fall onto the shafts **36** and paddles **38** and is whipped about and kept suspended by the closely opposed moving paddles **38.** Considering the relatively large clearance between the paddle ends **40** (several millimeters), the dominant function of the mechanism is to keep the cellulosic particles suspended in air as a gaseous "solution" or slurry. In the illustrated embodiment air is the suspending gas or fluid. However, it might be advantageous to substitute nitrogen or a non-oxidizing atmosphere particularly if the entire device is operated at pressures above atmospheric pressure to increase the operating temperature to one above 100 °C.

In keeping with the gaseous fluid suspension duties of the device the starting material should be raw cellulosic biomass that has been reduced to small enough dust-like particles to be readily suspended by the rotating paddles. Generally, the starting material represents biomass that has been reduced to particles that are only fractions of a millimeter in diameter. The larger the starting particles, the longer total breakdown of the cellulose takes. Ideally wood is reduced to a material approximating saw dust prior to disruption by the device **30** by use of the planer **52** and beater **44** of Fig. 1 or by devices providing a similar dust-like product.

In operation, the shafts **36** rotate at 1000 RPM or more. At this speed the cellulosic particles are whipped about by the paddles **38** and the air (gas) within the hopper becomes a constantly recirculating "fluid" of gas and cellulosic dust. At each pass through the paddles **38** some of the fragments contact the moving paddles **38** and shear force is imparted to them. Frictional forces of the circulating cellulose particles can generate appreciable heat. Further, the entire hopper **32** is jacketed by a heating/cooling system (not illustrated) so that specific temperatures can be maintained within the device. It has been found that an optimal temperature for disruption of many cellulosic materials at atmospheric pressure is about 40-50°C. Increasing the temperature above this can accelerate the disruption process, but the overall increase in energy usage may be unfavorable.

At the same time that heat and mechanical force is applied to the rapidly mixing cellulosic particles, water is added through a port **35** to achieve solvation of the paracrystalline arrays. As explained above, it is very difficult to add liquid water without having the material clump into "balls". If the material forms into "balls" most of the surface of the paracrystalline arrays are buried within the "ball" and little disruption of hydrogen bonds occurs. This is also true when so much water has been added that a slurry is formed. In a slurry the paracrystalline arrays may be exposed but the excess water acts as a lubricant so that no mechanical force can be applied to the arrays to peel them apart. The overall amount of water added is influenced by the residual amount of water bound to the cellulose at the start of the disruption. Higher temperatures permit somewhat more rapid addition of water.

It has been discovered that it is possible to add relatively large amounts of water through gradual addition of water "vapor". This is achieved by injecting water into the rapidly mixing particles in the form of a fine spray. The sprayed water is preheated to the temperature of the device (*e.g.*, 50°C), and liquid water is never observed accumulating in the device. At this temperature the spray evaporates almost immediately. For this reason the water addition is called vapor addition. As an alternative steam can be used as a means of adding water vapor and heating the entire apparatus. In any case the mixing cellulosic material absorbs a large amount of water (at least two times the starting weight of the cellulosic material-generally much more) without ever becoming visibly wet or forming "balls". It is believed that this continued absorption of water is made possible by the disruption of the paracrystalline arrays so that more and more cellulose becomes available for hydration.

That is, heated water is injected into the gaseous suspension or "slurry" of cellulosic particles. Water contacts the particles and is rapidly absorbed. As surface layers of the paracrystalline arrays absorb water, some water intercalates between the polymer chains. This greatly weakens the attachment of the surface polymer chains because there are hydrogen bonds between the polymer and the intercalated water rather than between a surface polymer chain and a more deeply embedded polymer chain. As the hydrated cellulosic material whips about in the disrupting device shear forces cause the separation of polymer chains along the weakened hydrated zones. As the paracrystalline arrays are broken down, this uncovers more cellulose arrays, which in turn become hydrated and disrupted. The process is continued until no further water is taken up. Depending on the fineness of the starting particles, the temperature employed and other factors this process can take between 12 and 24 hrs of processing in the above-illustrated machine. Of course, it the starting materials are excessively coarse, a much longer disruption cycle is required (hence the preferred use of preprocessing to form cellulosic dust as a starting material).

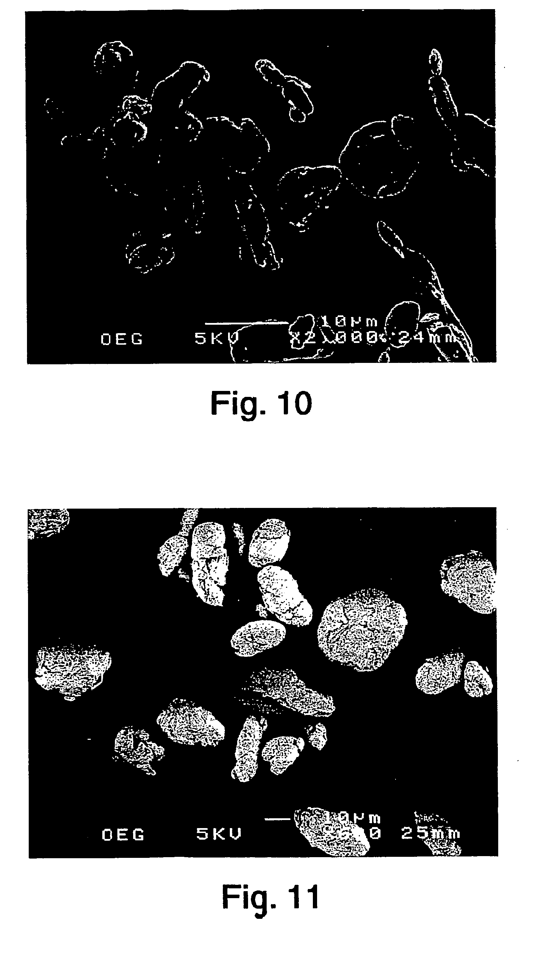

If "balls" are accidentally formed (*e.g.*, through the addition of excess fluid water), it is possible to reverse their formation through a process of "decompression drying". Essentially the chamber temperature is raised as rapid rotation of the paddles continues. The hopper or chamber is vented to allow water vapor to escape. It is possible to accelerate the drying process by pulling a partial vacuum on the chamber. The "balls" disintegrate as they dry eventually resulting in a chamber filled with fine particles suspended in air. It has been found advantageous to periodically go through a decompression drying cycle even when obvious "balls" are not visible. It seems likely that this step breaks up even microscopic aggregates (such as those seen in FIG. 11).

One means of increasing the disruption rate is to increase the temperature. A convenient and efficient means is to construct the entire device as an "autoclave". That is, the hopper is constructed as a pressure vessel into which super-heated steam is piped. The typical autoclave operates at temperatures of about 120 °C. Of course, depending on the pressure, the temperature can be considerably higher than this. Water can be added solely from the steam although water addition can be more rapidly attained by adding water through a fine liquid spray. One of the advantage of the autoclave approach is that "decompression drying" can be readily attained by merely venting the autoclave to the atmosphere. There is no need to apply a reduced pressure to accelerate the drying process.

The final product of cellulosic disruption is an exceedingly fine powder. It is believed that this material is largely intertwined cellulose chains having little or no paracrystalline areas. This material is in direct contrast with products of paper making or other maceration techniques wherein entire cell walls of pieces of cell walls continue to be visible upon microscopic observation. FIG. 10 shows the fine resulting powder at a magnification of 2,000X. The particles are amorphous in appearance and are generally less than 10 µm in diameter. It is believed that this structure results from an intertwined mass of single (i.e., no paracrystalline regions) cellulose chains. Significantly, there is no evidence of plant cell walls. The cellular structure has been completely disrupted. FIG. 11 shows "micro-balls" that result from adding excess water to partially disrupted cellulosic material. It appears that free cellulose chains as well as sheets of paracrystalline cellulose are wrapped into the balls. It has been discovered that if cellulosic biomass is disrupted to completion it becomes at least partially soluble in water. This indicates that short chains of cellulose with essentially no paracrystalline aggregates have been produced. The soluble or nearly soluble material is extremely vulnerable to digestion by enzymes.

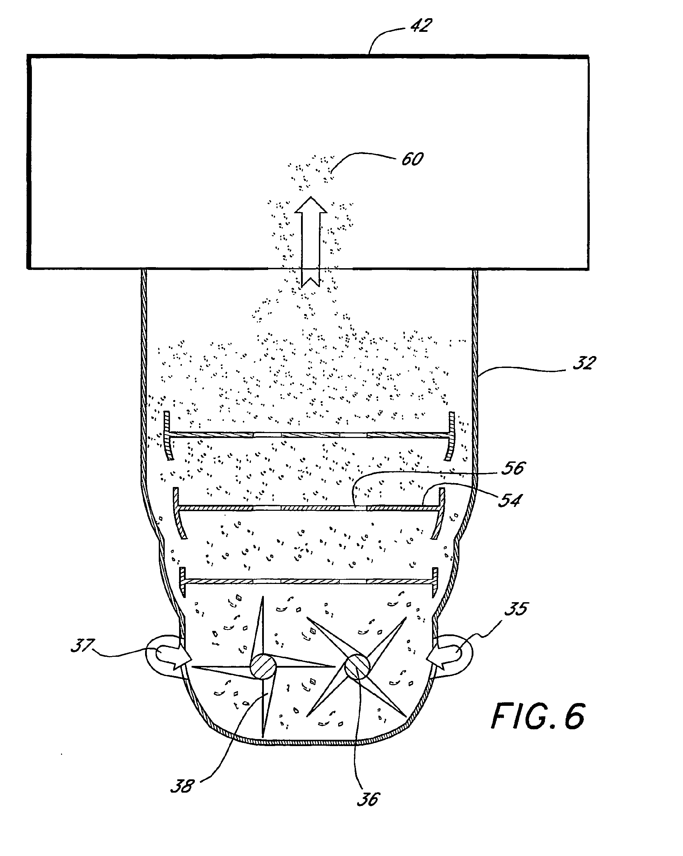

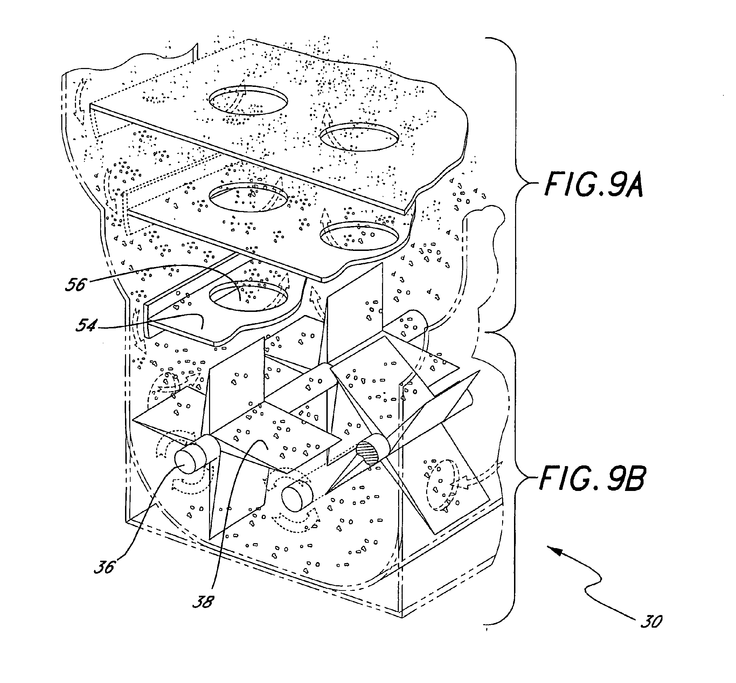

The disrupter **30** of the figures is shown with an optional fractionating mechanism designed for continuous "in line" processing. The "fractionater" consists of a number of baffle plates **54** (see FIG. 6). Each baffle plate **54** has one or more apertures **56.** In this embodiment the apertures **56** have dimensions of one to several centimeters in diameter. As the cellulosic dust **66** becomes disrupted, the smaller particles are able to pass upward through the apertures **56.** At each stage of the fractionater only the smallest particles are able to pass upward to the next stage (see FIGs. 9A-9B). As dust builds up at each stage, the larger particles travel back down to the rotating paddles **38** to undergo additional cycles of disruption. Only the tiniest, fully disrupted particles **60** make it to the top of the baffle stack where they are drawn off as finished product.

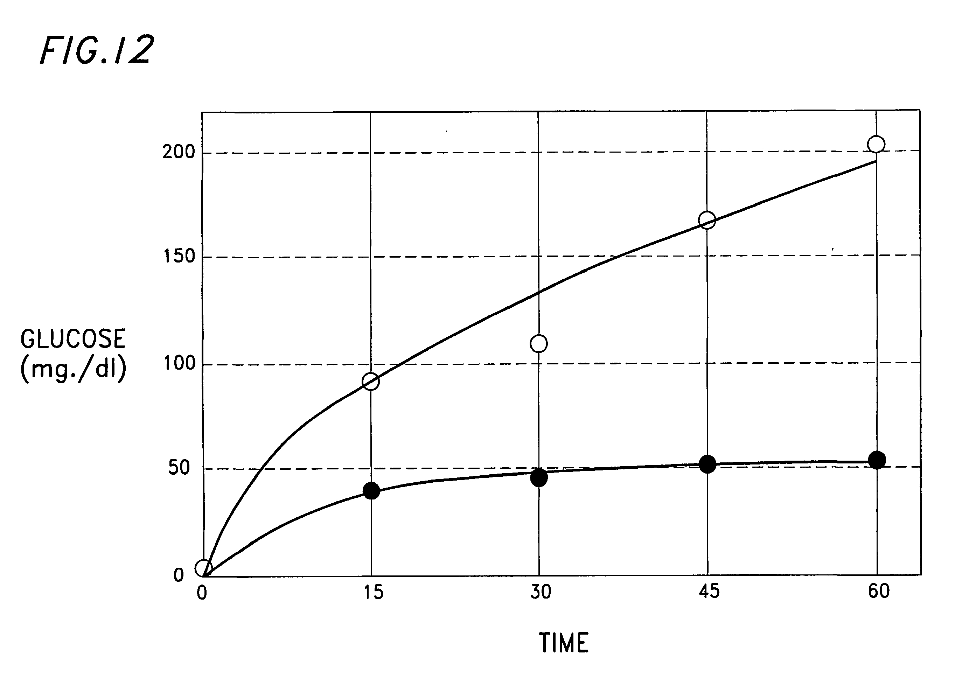

FIG. 12 shows a graphic representation of the enzymatic digestion of the disrupted cellulosic material of the present invention. The ordinate shows glucose concentration in mg/dl while the abscissa shows time in minutes. The digestion took place by adding 20 mg/ml of cellulase (Novo-Nordisk) to each sample at the zero time point. Incubation took place at 35°C. The open circles represent fully disrupted cellulosic material **60** while the closed circles represent cellulosic dust **66** (the starting material for the disruption). The plot shows that the digestion of the fully disrupted material is relatively linear. In fact, the digestion continues to essential completion (95% or better). On the other hand, the cellulosic dust **66** shows an initial release of glucose followed by very slow (if any) continued digestion. It is believed that the initial digestion represents the breakdown of that small proportion of cellulose that is not bound in the paracrystalline arrays. Thereafter, digestion is extremely slow as the enzyme must "chew in" from the edges of the paracrystalline arrays. This slow digestion is what is typically encountered making even enzymatic digestion of biomass impracticably slow. However, the disrupted cellulose **60** can be quantitatively digested into glucose, which can be used as a food source or can be fermented into ethanol.

To review, the present invention disrupts cellulosic biomass into readily hydrolyzable cellulose chains by breaking down the paracrystalline arrays present in cellulosic biomass. The resulting material can be readily hydrolyzed into glucose for use as a food or for fermentation into ethanol or other fuel components. The process involves suspending a "slurry" of cellulosic particles in air, or other gas, with rapid agitation while the paracrystalline arrays are hydrated through the addition of heated water-either fine spray or vapor. The hydration of the paracrystalline array weakens the hydrogen bonds and allows cellulose chains to be stripped off by the mechanical forces provided by the disrupting device **30.** Therefore, there are really two important steps occurring. First, the hydration of the paracrystalline arrays, and second the mechanical stripping off of the hydrated layers of the array. These steps or processes are intimately related. If the wrong hydration conditions exist, the surface layers of the array will not be hydrated and cannot be stripped away. If the surface layers are not stripped away, deeper layers cannot be hydrated and the entire disruption process is inhibited. Mechanical forces are unusually important. For example, if excess water is added, the water acts as a lubricant and prevents mechanical shear forces from stripping off any hydrated layers of cellulose. At the same time, excess water allows the partially disrupted material to roll up and form "balls". This protects large regions of paracrystalline array from further disruption.

It has been found that apart from maintaining optimal rates of water addition (water should be added as quickly as possible but slowly enough to provide sufficient liquid water so as to form "balls"), additives can be used to maximize shear forces acting on the hydrated cellulose. It is envisioned that these materials function through force transmission so they are generally referred to as "thickeners". It appears that virtually any viscosity increasing agent can be used to accelerate the disruption process. Optimal concentrations of the various "thickeners" is best discovered empirically. Optimal concentrations are generally a few percent or lower based on the total weight of the cellulosic material being disrupted. These agents are not required for the disruption. However, they can considerably accelerate the process and make the addition rate of water somewhat less critical. That is, some of these agents help prevent "ball" formation or otherwise facilitate the process.

Thickening agents include a variety of thickening "gums" of polysaccharide or oligosaccharide origin including starch, pectins, glucomannan, galactomannan, xanthan gums, inulins, polydextroses, dextrins, cellulose ethers (carboxymethyl cellulose), and hemicelluloses. In addition, a variety of other organic viscosity increasing agents are effective including proteins (gelatin), peptides, high molecular weight alcohols, polyethylene glycols, polyvinyl alcohols, polyvinylpyrrolidones, polyacrylic acids, polyacrylamides and detergents such as the polyoxyethanols. Besides these soluble hydrophilic agents a variety of fine particular agents are also effective. These include silica, alumina, magnesium, zirconium and titanium oxides. These "abrasive" particles are most effective when quite fine (only several µm in diameter). It is believed that these materials do not act as abrasives *per se* but interact with the cellulose chains through hydroxyl groups and increase the mechanical purchase on the chains. Surprisingly, finely powdered polytetrafluorethylene (PTFE) is also quite effective. Apparently, PTFE interacts with the cellulose through hydrogen bonds.

A surprisingly effective "thickening" agent is provided by simple brewer's yeast cells-particularly those left over from common brewing processes. These cells are only a few to a few tens of µm in diameter. They seems to function in the same way as the fine inorganic particles; however, because yeast cells have their own polysaccharide cell walls, they effectively bind to and interact with the cellulosic biomass. In addition, yeast cells may contain a variety of active enzymes, which may contribute to the disruption process through digestion. For any enzymes to function effectively, it may be advantageous to somewhat lower the temperature of the digestion (*e.g.*, closer to 40 °C rather than 50 °C). Other micro-organisms have not been tested, but it seems very likely that many of them will show the same favorable properties as yeast cells. The selection of "thickened" is a matter of economics. If the goal is to produce ethanol for fuel, use of relatively expensive organic "thickeners" may excessively drive up the costs. Agents such as spent brewer's yeast may accelerate the disruption process with at a negligible increase in cost.

While the preferred embodiment of the present invention has been described in terms of a gaseous slurry of cellulosic particles that are rapidly agitated during the addition or sprayed or vaporous water, the thickening agent can be used to practice the invention in a slightly different way. With the proper addition of a thickening agent it becomes possible to transmit force to the cellulosic particles in the presence of somewhat larger amount of water. It is still desirable to avoid so much water addition that the particles "ball up". However, with the addition of thickening agents the cellulosic particles can be formed into a "dough" which can be kneaded or beaten rather than suspended by rapidly rotating paddles or blades. In the case of a dough the illustrated mechanism can be employed but at a much lower rate of rotation. Devices like hooks and rollers designed for use with actual dough can also be effectively employed (*e.g.*, bakery devices). With a dough-based process it can be somewhat more difficult to add the water. Vapor addition is not effective, but water can be added by spray or in small aliquots as the kneading progresses. It is possible to transition back and forth from the air suspension to the dough method by using decompression drying as described above. It is also possible to dry the dough in bulk and then powder it with, for example, a ball mill, to convert the dough into a form suitable for the gas suspension process.

### Examples

Ten kilograms of bagasse were added to the device **30** after preprocessing with the beater **44** of Fig. 1. With bagasse and similar materials the planing step may not be necessary. In this experiment the hopper **32** was sized to hold about 200 liters and was constructed without baffle plates **54.** About 10 1 of water were added as a spray while the shafts **36** rotated slowly to mix the water thoroughly into the bagasse. The temperature was increased to 40 °C and the rate of rotation was increased. When the mass became very dry in appearance an additional 101 of water was added as a spray. After 5 hr the initially long bagasse fibers had shortened and the pieces were reduced to thin fragments. At this point water was added 11 at a time a 1 hr intervals. After an additional 5-10 hr the mass took on a somewhat granular appearance caused by the sticking together of minute cellulosic particles. Progress of the disruption was monitored with a microscope at a magnification of 50X. Decompression drying was used repeatedly, and at the end of several cycles the bagasse had been reduced to an extremely fine cellulosic powder with a weight of 8 kg. The final weight is dependent upon how much water was in the starting material.

In a second example newsprint (paper) was prepared by reducing it to torn fragments (less than 1 cm x 1 cm). One kg of paper fragments were put into the device **30** along with 2 kg of live yeast cells (brewery byproduct) and 100 ml of water. The temperature is increased to 35-40 °C. As the mass was stirred, the fibrous characteristic of the paper is gradually lost. Additional paper was added in 100 g aliquots accompanied by 50 ml of water per each aliquot. This continues until 251 of water have been added. The material was processed until a milky solution with no indication of paper fibers is visible. At this point enzymes are added (1 g of cellulase (Meiselase) from Meiji Seika Kaisha Ltd. and 1 g of "Novozaim" from Novo Nordisk). After 40 hr the cellulose was essentially completely digested into sugar. While newspaper and other paper can effectively be disrupted using thickener (yeast cells) in somewhat of an excess of water, paper is relatively resistant to complete disruption by the gaseous suspension method. Disruption takes considerably longer than an equivalent weight of cellulosic biomass. It would appear that the processing of cell wall to make paper renders the cellulose more resistant to disruption.

About 15 kg of saw dust were placed into the device **30.** About 101 of water added gradually in 21 aliquots with continuous agitation. The temperature was increased to about 40 °C and the material appeared to swell as it was rapidly processed (stirred). A spray was used to add 101 of water at a rate of 11 per 10 min. If any sign of "ball" formation was observed, the water addition was stopped until the "balls" were dispersed by the stirring. The overall temperature was related to the rate of stirring. That is, as the speed is increased, the temperature increases. Thus, it was possible to dry the material by increasing the rotation speed of the shafts **36** while stopping the addition of water. At the end of the process 13 kg of extremely fine cellulosic particles remained. The resulting particles could be rapidly hydrolyzed by chemical or enzyme.

For example, 1 kg of the extremely fine cellulosic particles would be gradually stirred into 101 of water. The pH would then be lowered to 6.0 with acetic acid and 2 g of Meiselase (from Meiji Seika Kaisha Ltd.) and 2 g of "Novozaim" (from Novo Nordisk) were added. The material was reacted at 40 °C for 24 hr. The liquid was filtered, neutralized and dried yielding 520g of reducing sugar.

It is also possible to use heat stabile enzymes from thermophilic organisms. In such a case equal weights of wood powder and water are mixed with 1% by weight thermophilic cellulase and stirred at 60-70 °C. There is essentially complete digestion of the cellulose within 24 hr. Continued stirring is important to achieve a maximal rate of digestion.

The process of the invention has been tried with cellulosic biomass from a wide variety of plant sources. Both woody and herbaceous materials appear to work equally well. Cell walls of dicotyledonous as well as monocotyledonous flowering plants and woods of gymnosperms can all be effectively disrupted. The precise rate of disruption as well as the optimal rate of water addition varies somewhat from species to species. However, by observing "ball" formation as explained above it is relatively simple to arrive at the optimal conditions for disrupting any cellulosic sample.

Various cellulosic powders may have additional uses or properties. It has been found that cellulosic powder from various grasses is an excellent substrate for various fungi. It also appears that some types of wood, such as that of *Cryptomeria japonica,* yield a fine powder that has antibacterial or anti-infective properties. It is presumed that these properties result from tannins and other phenolics in the original wood. These compounds are not water-soluble and are apparently not hydrolyzed by the disruption process.

The following claims are to be understood to include what is specifically illustrated and described above, what is conceptually equivalent, what can be obviously substituted and also what essentially incorporates the essential idea of the invention. Those skilled in the art will appreciate that various adaptations and modifications of the just-described preferred embodiment can be configured without departing from the scope of the invention. The illustrated embodiment has been set forth only for the purposes of example and that should not be taken as limiting the invention. Therefore, it is to be understood that, within the scope of the appended claims, the invention may be practiced other than as specifically described herein.

## Claims

1. A process for mechanically disrupting cellulosic biomass by adding only water to produce a readily hydrolyzable powder comprising the steps of:
agitating cellulosic biomass particles to create a suspension of said particles (66) in air at atmospheric pressure within a container (32) that retains water pressure vapor;
raising the temperature of the suspension to between 35°C and 100 °C;
adding water as a fine spray or as water vapor at a sufficiently slow rate that the water is absorbed by said particles without an accumulation of free liquid water;
continuing to add water until said particles are unable to absorb more water; and venting the container (32) to release of water vapor, thereby disrupting clumps of particles, whereby said powder (60) is produced.

2. The process of claim 1 wherein the water is added as steam.

3. An apparatus for disrupting cellulosic biomass by adding only water to produce a readily hydrolyzable powder comprising:
means (38) for agitating cellulosic biomass particles (66) to create a suspension of said particles in air at atmospheric pressure within a container (32) that retains water vapor;
means for increasing the temperature of the suspension to be between 35° and 100°C;
means (35) for adding water as a fine spray or as water vapor at a sufficiently slow rate that the water is absorbed by said particles without an accumulation of free liquid water; and
means for venting the container (32) to release water vapor, thereby disrupting clumps of particles,
whereby said powder (60) is produced.

## Patentansprüche

1. Verfahren zum mechanischen Aufschluss von zellulosehaltiger Biomasse nur durch Zusetzen von Wasser, um ein leicht hydrolisierbares Pulver herzustellen, umfassend die Schritte:
Umrühren zellulosehaltiger Biomasse-Teilchen, um eine Suspension der Teilchen (66) in Luft bei Atmosphärendruck in einem Behälter (32) zu erzeugen, der Wasserdampf enthält;
Anheben der Temperatur der Suspension auf zwischen 35 °C und 100 °C; Zusetzen von Wasser als feinen Sprühnebel oder als Wasserdampf mit einer ausreichend geringen Geschwindigkeit, so dass das Wasser durch die Teilchen ohne Ansammlung von freiem flüssigen Wasser aufgesogen wird;
Fortführen des Zusetzens von Wasser bis die Teilchen nicht mehr imstande sind, weiteres Wasser aufzusaugen; und
Entlüften des Behälters (32), um Wasserdampf freizusetzen, wodurch Teilchenklumpen zersetzt werden und das Pulver (60) erhalten wird.

2. Verfahren nach Anspruch 1, wobei das Wasser als Dampf zugegeben wird.

3. Vorrichtung zum Aufschluss von zellulosehaltiger Biomasse nur durch Zusetzen von Wasser, um ein leicht hydrolisierbares Pulver herzustellen, umfassend:
Mittel (38) zum Umrühren zellulosehaltiger Biomasse-Teilchen (66), um eine Suspension der Teilchen in Luft bei Atmosphärendruck in einem Behälter (32) zu erzeugen, der Wasserdampf enthält;
Mittel zum Anheben der Temperatur der Suspension auf zwischen 35 °C und 100 °C; Mittel (35) zum Zusetzen von Wasser als feinen Sprühnebel oder als Wasserdampf mit einer ausreichend geringen Geschwindigkeit, so dass das Wasser durch die Teilchen ohne Ansammlung von freiem flüssigen Wasser aufgesogen wird; und Mittel zum Entlüften des Behälters (32), um Wasserdampf freizusetzen, wodurch Teilchenklumpen zersetzt werden,
um das Pulver (60) herzustellen.

## Revendications

1. Procédé pour mécaniquement disloquer une biomasse cellulosique en ajoutant uniquement de l'eau afin de produire une poudre facilement hydrolysable comprenant les étapes consistant à :
agiter des particules d'une biomasse cellulosique afin de créer une suspension desdites particules (66) dans l'air à la pression atmosphérique au sein d'un récipient (32) qui conserve la pression de la vapeur d'eau ;
augmenter la température de la suspension à une température comprise entre 35 °C et 100 °C ;
ajouter de l'eau sous forme d'une fine pulvérisation ou de vapeur d'eau à un débit suffisamment lent de sorte que l'eau soit absorbée par lesdites particules sans accumulation d'eau liquide libre ;
continuer à ajouter de l'eau jusqu'à ce que lesdites particules soient incapables d'absorber davantage d'eau ; et
ventiler le récipient (32) pour libérer de la vapeur d'eau, ce qui disloque ainsi les amas de particules, moyennant quoi ladite poudre (60) est produite.

2. Procédé selon la revendication 1, où l'eau est ajoutée sous forme de vapeur d'eau.

3. Appareil pour disloquer une biomasse cellulosique en ajoutant uniquement de l'eau afin de produire une poudre facilement hydrolysable comprenant :
un moyen (38) pour agiter les particules de la biomasse cellulosique (66) afin de créer une suspension desdites particules dans l'air à la pression atmosphérique au sein d'un récipient (32) qui conserve la vapeur d'eau ;
un moyen pour augmenter la température de la suspension afin qu'elle soit comprise entre 35 °C et 100 °C ;
un moyen (35) pour ajouter de l'eau sous forme d'une fine pulvérisation ou de vapeur d'eau à un débit suffisamment lent de sorte que l'eau soit absorbée par lesdites particules sans accumulation d'eau liquide libre ; et
un moyen pour ventiler le récipient (32) afin de libérer de la vapeur d'eau, ce qui disloque ainsi les amas de particules,
moyennant quoi ladite poudre (60) est produite.
